# EUROPEAN PATENT APPLICATION

(11) **EP 1 061 051 A1**
(43) Date of publication of application: **20.12.2000**
(21) Application number: 99961485.2
(22) Date of filing: 28.12.1999
(51) Int. Cl.: C03B 11/08

(54) **DIE FOR FORMING OPTICAL DEVICE, METHOD FOR MANUFACTURING THE SAME, AND OPTICAL DEVICE**

(30) Priority: 05.01.1999 JP 47799; 05.01.1999 JP 47899
(71) Applicant: Matsushita Electric Industrial Co., Ltd., Kadoma-shi, Osaka-fu, 571-8501 (JP)
(72) Inventor: KATAOKA, Hidenao, Osaka-shi, Osaka 536-0017 (JP); DOHI, Miyoko, Higashiosaka-shi, Osaka 577-0804 (JP); UMETANI, Makoto, Izumi-shi, Osaka 594-0031 (JP)
(74) Representative: VOSSIUS & PARTNER
(86) International application number: JP9907422
(87) International publication number: WO0040516

(57) **Abstract**

A die comprises a press member (11) having a press face (11a) for pressing an optical device material at its end, an intermediate film (12) formed on the press face (11a), and a protective film (13) formed on the intermediate film (12). The press member (11) is made of crystallized glass. Therefore, the press face can be precisely machined and enables the die to press an optical device at high temperature.

## Description

### TECHNICAL FIELD

The present invention relates to a die for molding an optical element, with which an optical element is produced by pressing, and a method for producing the die, and an optical element using the die.

### BACKGROUND OF THE INVENTION

In order to press-mold a high-precision optical element directly, a die for press-molding an optical element material is necessary.

As a die for press-molding an optical element material, there are those using a cemented carbide, a cermet, or a glass as a material of the die.

However, a press surface of a die for molding an optical element needs to be formed corresponding to the shape of the optical element. When using a cemented carbide or a cermet as a material of the die, there have been problems that accurate working of a cemented carbide or a cermet is difficult, the time of the working is long, and cost of the working is very high. Also, because of the difficulty in the working, irregularity in the shape of the die becomes large. As a result, irregularity also is caused in the shape of the molded optical element, and the optical performance of the optical element becomes unstable.

Thus, it has been proposed to use a glass as a material of a die for molding an optical element. As a the for molding an optical element using a glass as its material, a die obtained by pressing a glass material with a mother die, in which a press surface is accurately processed into the same shape as of the optical element, has been proposed (see JP 64-33022 A and JP 1-239030 A). Furthermore, a the for molding an optical element that includes a main body made of glass and a thin film formed on a press surface of the main body also has been proposed (see JP 1-148714 A). Furthermore, a die for molding an optical element obtained by melt bonding a main body made of glass and an adherent member made of a heat-resistant metal or ceramic also has been proposed (see JP 2-102136 A).

However, the above-mentioned conventional die for molding an optical element, which uses a conventional glass as its material, has had a drawback in that an optical element material cannot be press-molded at a temperature of at least the glass transition temperature of the glass used as a material of the die. That is, there has been a problem that when the optical element is press-molded at a temperature of at least the glass transition temperature of the glass used as the material of the die, the press surface of the die is deformed due to the atmosphere of high temperature during the molding.

Thus, when a glass that needs to be molded at a high temperature (e.g. crown glass: BK7, softening temperature of 642 °C) is used as an optical element material, it is necessary to use a glass with a glass transition point higher than the molding temperature of the optical element (the molding temperature is approximately near the softening point) as a material of the die for molding the optical element.

Furthermore, when producing a die for molding an optical element using a conventional glass, because it is necessary to carry out a press-transcription with a mother die at a high temperature, there have been problems that shrinkage of the glass in cooling process is large, and accuracy of the press surface of the die after molding is poor.

### DISCLOSURE OF THE INVENTION

In order to solve the above-mentioned problems, it is an object of the present invention to provide a die for molding an optical element in which a press surface is accurately formed easily and with which an optical element can be press-molded at a high temperature, a method for producing the die, and an optical element using the die.

In order to accomplish the above object, a die of the present invention for press-molding an optical element material includes a press member having a press surface for pressing the optical element material, the press member made of a crystallized glass. In this die, because the press member is made of a crystallized glass, the press surface can be formed by press-molding. Thus, in the die of the present invention, the press surface is formed accurately with ease. Furthermore, because a crystallized glass has a higher softening point than that of the glass before crystallization (hereinafter referred to as a mother glass), an optical element can be press-molded at a temperature higher than the glass transition point of the mother glass as a material of the press member. Thus, according to the the of the present invention, an optical element can be press-molded at a high temperature.

It is preferable that the die of the invention further includes a protective film, which is inactive to the optical element material (a material that does not melt adhere to the optical element material and is easily separated), on the press surface. Thus, when press-molding an optical element, melt adhesion of an optical element material onto the press surface can be prevented.

It is preferable in the die of the invention that the protective film includes at least one metal selected from Pt (platinum), Pd (palladium), Ir (iridium), Rh (rhodium), Os (osmium), Ru (ruthenium), Re (rhenium), W (tungsten), and Ta (tantalum). Thus, oxidation resistance of the press member can be improved, and adhesion between the press member and a glass material can be prevented.

It is preferable that the die of the invention further includes an intermediate film for preventing the protective film from peeling from the press member. Thus, the protective film can be prevented from peeling when press-molding an optical element repeatedly.

It is preferable in the die of the invention that the intermediate film includes a component included in the press member or a component included in the protective film. Thus, the protective film can be prevented from peeling.

It is preferable in the die of the invention that the intermediate film includes at least one metal selected from Cr (chromium), Ta (tantalum), Mo (molybdenum), Ni (nickel), W (tungsten), Zr (zirconium), Co (cobalt), Ti (titanium), and Cu (copper). Thus, the protective film can be prevented from peeling.

It is preferable that the die of the invention further includes a base made of a metal, in which the press member is formed on the base. Thus, a die capable of producing an optical element with good productivity can be obtained.

It is preferable that the die of the invention further includes a metal film between the base and the press member. Thus, separation between the base and the press member can be prevented.

It is preferable that the die of the invention further includes a protective member fixed on the periphery of the press member. Thus, the press member is protected by the protective member, so that a die with a high durability can be obtained.

It is preferable in the die of the invention that the protective member is made of a metal, a cermet, or a ceramic. Thus, a die with a particularly high durability can be obtained.

It is preferable in the die of the invention that the protective member has a protective layer on its surface. Thus, oxidation of the protective member and deformation of the shape of its surface can be prevented.

It is preferable in the die of the invention that the thermal expansion coefficient of the press member is smaller than that of the protective member. Thus, the press member and the protective member can be fixed firmly.

It is preferable in the die of the invention that the crystallized glass contains a nucleating agent. Thus, a press member made of a crystallized glass can be formed easily.

It is preferable in the die of the invention that the nucleating agent includes at least one selected from TiO₂, ZrO₂, Fe₂O₃, V₂O₅, NiO, Cr₂O₃, fluorides, sulfides, Pt (platinum), Ru (ruthenium), Rb (rubidium), Pd (palladium), Os (osmium), Ir (iridium), Ag (silver), and Au (gold). Thus, a press member made of a crystallized glass can be produced easily.

A method of the present invention for producing a die for molding an optical element that includes a press member having a press surface for pressing an optical element material comprises: a first step of forming the press surface by press-molding a mother glass, which is softened by heating, with a mother die; and a second step of forming the press member made of a crystallized glass by heat treating the mother glass that has been press-molded under a condition at which the mother glass is crystallized. According to this method, a die for molding an optical element that includes a press member made of a crystallized glass can be produced easily.

It is preferable in the method of the invention that the first step comprises placing the mother glass, which is softened by heating, on a base, and then forming the press surface by press-molding the mother glass with the mother die. Thus, a die for molding an optical element in which the press member is formed on a base can be produced.

It is preferable in the method of the invention that the base has a metal film on a surface that is in contact with the mother glass. Thus, separation between the base and the mother glass can he prevented.

It is preferable in the method of the invention that the first step comprises placing the mother glass, which is softened by heating, inside an approximately cylindrical protective member, and then forming the press surface by press-molding the mother glass with the mother die. Thus, a die for molding an optical element having a protective member fixed on the periphery of the press member can be produced.

It is preferable that the method of the invention further comprises a third step of forming a protective film, which is inactive to the optical element material, on the press surface after the second step. Thus, a die for molding an optical element that has a protective film on the press surface can be formed.

It is preferable that the method of the invention further comprises a third step of forming an intermediate film on the press surface, and a fourth step of forming a protective film, which is inactive to the optical element material, on the intermediate film. Thus, a die for molding an optical element having an intermediate film and a protective film on the press surface can be formed.

It is preferable in the method of the invention that the protective film includes at least one metal selected from Pt, Pd, Ir, Rh, Os, Ru, Re, W and Ta.

It is preferable in the method of the invention that the intermediate film includes a component included in the press member or a component included in the protective film.

It is preferable in the method of the invention that the intermediate film includes at least one metal selected from Cr, Ta, Mo, Ni, W, Zr, Co, Ti and Cu.

It is preferable in the method of the invention that the mother glass contains a nucleating agent. Thus, the mother glass can be crystallized easily.

It is preferable in the method of the invention that the nucleating agent includes at least one selected from TiO₂, ZrO₂, Fe₂O₃, V₂O₅, NiO, Cr₂O₃, fluorides, sulfides, Pt, Ru, Rb, Pd, Os, Ir, Ag and Au. Thus, the mother glass can be crystallized easily.

An optical element of the present invention is produced by press-molding an optical element material using the die of the present invention. That is, the optical element of the present invention is press-molded using a die in which a press surface is accurately formed easily and with which an optical element can be press-molded at a high temperature. Thus, the optical element of the present invention has a high working accuracy and is inexpensive.

### BRIEF DESCRIPTION OF THE DRAWINGS

Fig. 1 shows an example of the die of the present invention for molding an optical element; Fig. 1(a) is a plan view, and Fig. 1(b) is a cross-sectional view.
Fig. 2 shows another example of the die of the present invention for molding an optical element; Fig. 2(a) is a plan view, and Fig. 2(b) is a cross-sectional view.
Fig. 3 shows yet another example of the die of the present invention for molding an optical element; Fig. 3(a) is a plan view, and Fig. 3(b) is a cross-sectional view.
Fig. 4 is a cross-sectional view showing yet another example of the die of the present invention for molding an optical element.
Fig. 5 is a cross-sectional view showing yet another example of the die of the present invention for molding an optical element.
Fig. 6 is a process diagram showing an example of the method of the present invention for producing a die for molding an optical element.
Fig. 7 is a process diagram showing another example of the method of the present invention for producing a die for molding an optical element.
Fig. 8 is a process diagram showing yet another example of the method of the present invention for producing a die for molding an optical element.
Fig. 9 is a process diagram showing an example of a method for producing the optical element of the invention.

### BEST MODE FOR CARRYING OUT THE INVENTION

In the following, embodiments of the present invention are described referring to the accompanying drawings.

### First Embodiment

In a first embodiment, an example of a die of the present invention for molding an optical element is described.

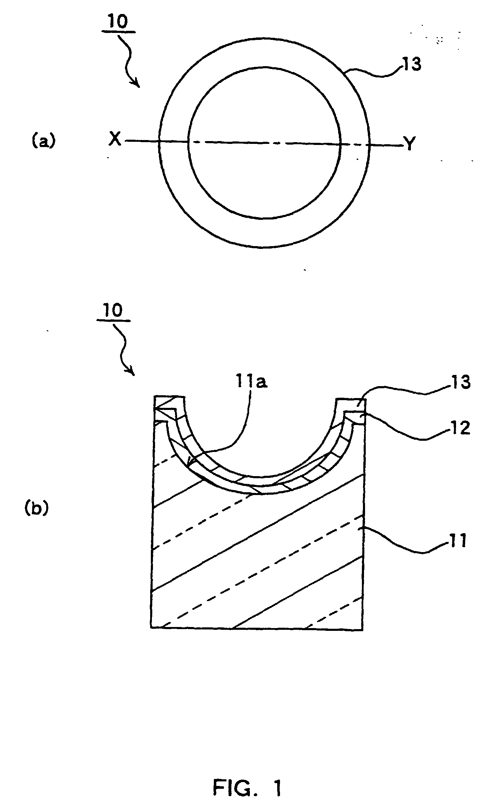

Fig. 1(a) is a plan view of a die 10 of the first embodiment for molding an optical element, which is viewed from the side of a press surface. Fig. 1(b) is a cross-sectional view taken along the line X-Y of Fig. 1(a).

Referring to Fig. 1, the die 10 has a press member 11 having on one end a press surface 11a for pressing an optical element material, an intermediate film 12 formed on the press surface 11a, and a protective film 13 formed on the intermediate film 12.

The press member 11 is made of a crystallized glass. As a mother glass that is a material of the press member 11, for example, silicate glass (SiO₂ based glass), aluminosilicate glass (Al₂O₃-SiO₂ based glass), borate glass (B₂O₃ based glass), borosilicate glass (B₂O₃-SiO₂ based glass), or phosphosilicate glass (Li₂O-SiO₂ based glass) may be used. It is preferable that the press member 11 contains, for example, at least one selected from TiO₂, ZrO₂, Fe₂O₃, V₂O₅, NiO, Cr₂O₃, fluorides, sulfides, Pt, Ru, Rb, Pd, Os, Ir, Ag, and Au, as a nucleating agent. By having a nucleating agent contained in the press member 11, it is possible to produce easily a press member 11 made of a crystallized glass. The press member 11 is, for example, of a cylindrical shape. The press member 11 has a press surface 11a at an end, and the press surface 11a has a reversed shape of an optical element that is press-molded.

The intermediate film 12 is formed to improve adhesiveness between the press member 11 and the protective film 13. The intermediate film 12 comprises, for example, a material including a component included in the press member 11, or a material including a component included in the protective film 13, or a material including at least one metal selected from Cr, Ta, Mo, Ni, W, Zr, Co, Ti and Cu. The material of the intermediate film 12 is selected depending on the press member 11 and the protective film 13. Moreover, the intermediate film 12 also may be formed on other portion of the press member 11 including the press surface 11a.

The protective film 13 is made of a material that is inactive to an optical element material to be press-molded (a material that does not allow the optical element material to be melt adhered and makes it separated easily). The material of the protective film 13 is selected depending on the optical element material to be press-molded. Specifically, as the protective film 13, for example, a thin film including at least one metal selected from Pt, Pd, Ir, Rh, Os, Ru, Re, W and Ta may be used. Moreover, the protective film 13 also may be formed on another portion of the press member 11 including the press surface 11a.

In the die 10, the press member 11 is made of a crystallized glass. Thus, according to the die 10, an optical element can be press-molded at a temperature higher than the glass transition point of a mother glass (a glass before crystallization), which is a material of the press member 11. Furthermore, because the crystallized glass has a small thermal expansion coefficient, when an optical element is press-molded at a high temperature, it can be press-molded with good working accuracy.

Although a die including an intermediate film and a protective film has been described in the above first embodiment, a die not including an intermediate film or a die not including an intermediate film and a protective film also may be used (the same also applies to the following embodiments). Even with such a construction, a die in which a press surface is accurately formed easily and which is capable of press-molding at a high temperature can be obtained, compared to a conventional die for molding an optical element. In particular, when the optical element material is difficult to be melt adhered to the press member 11, significance of the protective film is not large.

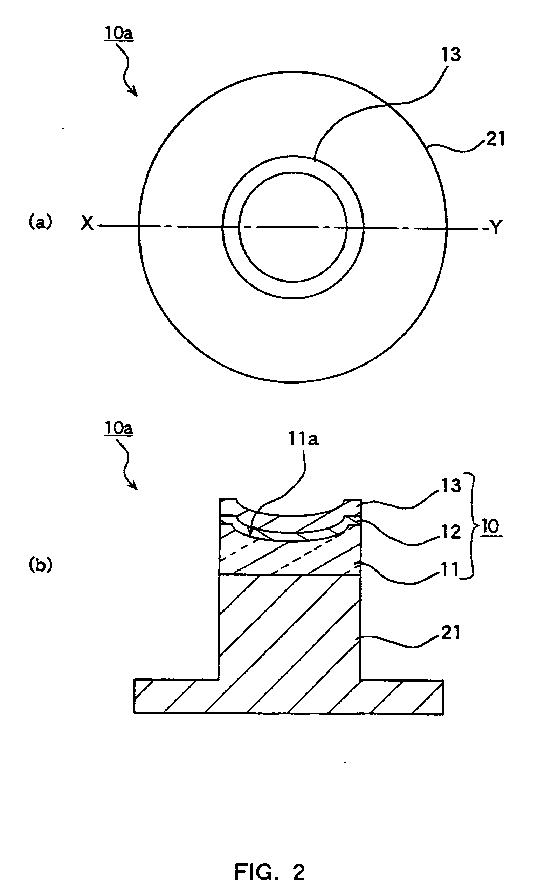

Furthermore, in the die of the invention for molding an optical element, the press member 11 may be formed on a base. Fig. 2(a) is a plan view showing an example of such a die 10a for molding an optical element. Fig. 2(b) is a cross-sectional view taken along the line X-Y of Fig. 2(a).

Referring to Fig. 2, the die 10a includes a base 21 and the die 10 for molding an optical element, which is formed on the base 21. That is, the die 10a has a base 21, a press member 11 formed on the base 21, an intermediate film 12 formed on a press surface 11a, and a protective film 13 formed on the intermediate film 12. Because the die 10 and its constituent parts have been already described, overlapped explanation is omitted.

The base 21 has, for example, a convex shape in cross section as shown in Fig. 2. It is preferable to use a material with a good thermal conductivity as the base 21, and for example, a metal may be used. By using a material with a good thermal conductivity for the base 21, it becomes easy to press-mold an optical element through heating. Moreover, the base 21 also may have other shapes, such as a ring-shape.

Furthermore, the die 10a further may include a metal film between the base 21 and the press member 11 to improve adhesiveness between the base 21 and the press member 11. As such a metal film, for example, a metal film made of Cr, Co, Fe, Mo, Ta, Ni, W, Zr, Ti, Cu, Ir or Pt may be used. Thus, separation between the base 21 and the press member 11 can be prevented.

In the die 10a for molding an optical element, the same effects as in the above-mentioned die 10 can be obtained. Furthermore, in the die 10a, the press member 11 is formed on the base 21. Accordingly, in the die 10a, because heat of a press head is transmitted easily to an optical element material when press-molding an optical element, an optical element can be press-molded with good productivity.

### Second Embodiment

In a second embodiment, another example of a die of the invention for molding an optical element is described.

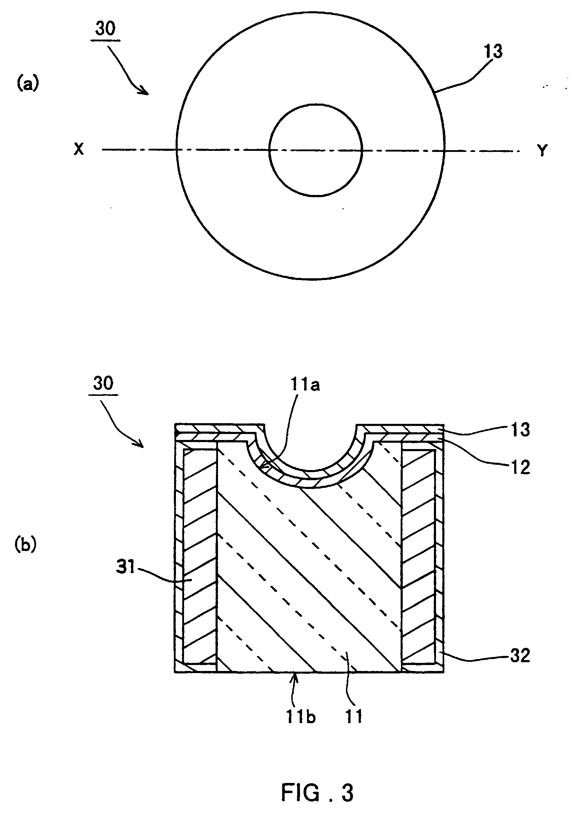

Fig. 3(a) is a plan view of a die 30 of the second embodiment for molding an optical element viewed from the side of a press surface. Fig. 3(b) is a cross-sectional view taken along the line X-Y of Fig. 3(a). Referring to Fig. 3, the die 30 includes the die 10 for molding an optical element, and further includes a protective member 31 fixed on the periphery of the press member 11 of the die 10. That is, the die 30 includes a press member 11 having at one end a press surface 11a for pressing an optical element material, an intermediate film 12 formed on the press surface 11a, a protective film 13 formed on the intermediate film 12, and the protective member 31 fixed on the periphery of the press member 11. Because the die 10 and its constituent parts have been described in the first embodiment, overlapped explanation is omitted.

The protective member 31 protects the press member 11, and is made of, for example, a metal, a cermet, or a ceramic. As the protective member 31, a cemented carbide including tungsten carbide as a main component preferably is used in terms of strength. Furthermore, it is preferable that the thermal expansion coefficient of the press member 11 is smaller than that of the protective member 31. Furthermore, it is preferable that the protective member 31 has a high thermal conductivity. With the high thermal conductivity of the protective member 31, an optical element can be press-molded through heating with good productivity.

The protective member 31 has a protective layer 32 on its surface. The protective layer 32 is formed to improve oxidation resistance of the protective member 31. As the protective layer 32, for example, a Pt-W alloy may be used.

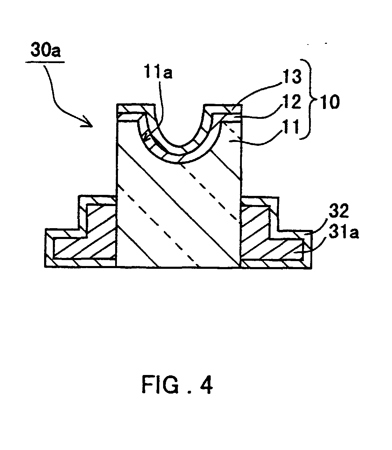

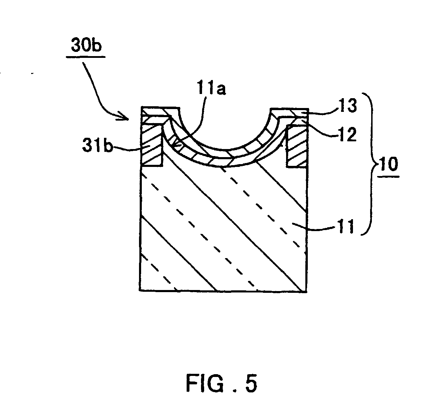

Moreover, the shape of the protective member 31 is not limited to the shape shown in Fig. 3. Figs. 4 and 5 show examples of dies for molding an optical element that have a protective member of other shapes.

Referring to Fig. 4, in a the 30a for molding an optical element, a protective member 31a is formed only at the bottom side (the side opposite to the press surface 11a) on the periphery of a press member 11. The protective member 31a has an approximately cylindrical shape having steps, and has a protective layer 32 on its surface. That is, the protective member 31a has a shape of two cylinders having the same inner diameter and different outer diameters that are bonded, so that their respective center axes may coincide.

Referring to Fig. 5, a die 30b for molding an optical element has an approximately cylindrical shaped protective member 31b only at the side of a press surface 11a on the periphery of a press member 11.

In the die 30 of the above second embodiment for molding an optical element, the press member 11 made of a crystallized glass is protected at its periphery by the protective member 31. Thus, when press-molding an optical element using the die 30, cracking or breakage in the press member 11 occurs with more difficulty than in the case of using a conventional die made of glass only.

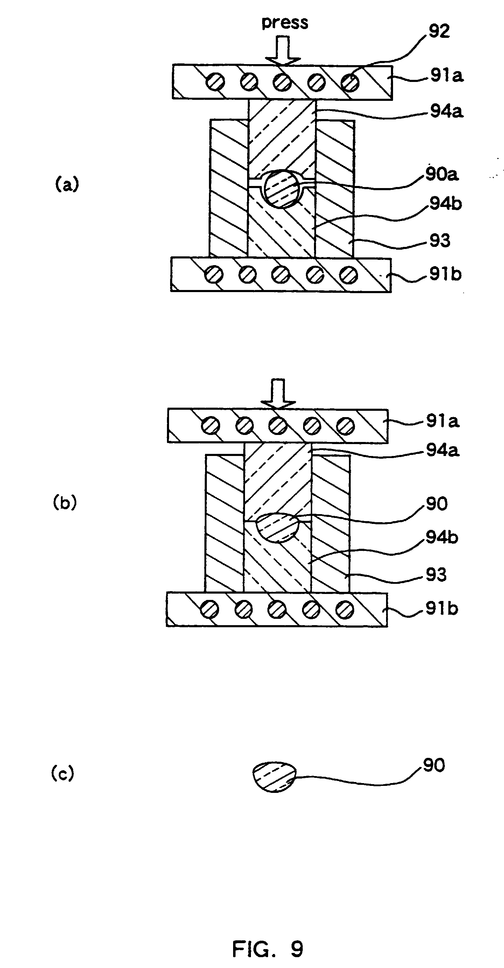

Furthermore, in the die 30, by placing a protective member 31 made of a metal or the like, which has a better thermal conductivity than glass, on the periphery of the press member 11, a die with a good thermal conductivity can be obtained. Thus, according to the die 30, because the heat of heaters 92 in a machine for molding optical elements (see Fig. 9) can be transmitted to the optical element material efficiently when press-molding an optical element, an optical element can be press-molded with good productivity.

### Third Embodiment

In a third embodiment, an example of the method of the invention for producing a die for molding an optical element is described. According to the method of the third embodiment, the dies described in the first and second embodiments can be produced.

Furthermore, a press member 11, an intermediate film 12, a protective film 13, a base 21, a protective member 31, and a protective layer 32, which are described in this third embodiment, are the same as those described in the first or second embodiment, so that overlapping explanation is omitted.

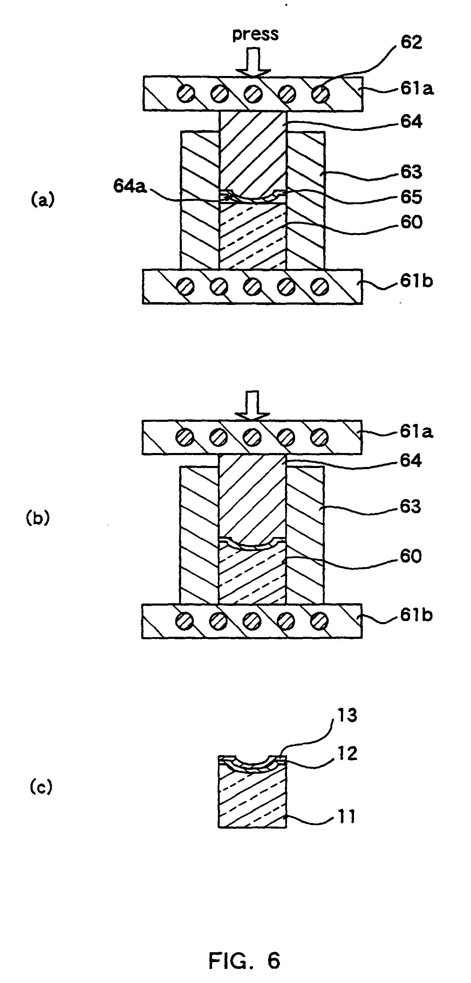

Referring to Fig. 6, the method of the third embodiment is described. First, as shown in Fig. 6(a), a mother glass 60 that is a material of the press member 11 is placed in a die-molding machine.

The die-molding machine includes press heads 61a and 61b, heaters 62 buried in the press heads 61a and 61b, a drum 63 placed on the press head 61b, and a mother the 64 movable in the drum 63.

The mother die 64 has a press surface 64a that is formed into a desired shape of an optical element. A protective film 65 for preventing the mother glass 60 from melt adhering is formed on at least the press surface 64a. As the mother die 64, for example, a cemented carbide, a cermet, a ceramic, or the like may be used. As the cemented carbide, for example, a WC-Co alloy or the like may be used. Also, as the cermet, a TiN-TaN based cermet, a TiC-TaN-Ni-Mo based cermet, or the like may be used. As the protective film 65, a material that is excellent in oxidation resistance and high temperature strength and is inactive to the material of the press member may be used. Specifically, it is preferable that the protective film 65 is made of a metal film including at least one element selected from platinum, palladium, iridium, rhodium, osmium, ruthenium, rhenium, tungsten, and tantalum. For example, Pt, a Pt-Ir alloy or a PT-W alloy may be used as the protective film 65.

The mother glass 60 is placed in the drum 63. The mother glass 60 becomes the press member 11 through crystallization, and preferably it contains a nucleating agent. It is preferable that the mother glass 60 contains, for example, at least one selected from TiO₂, ZrO₂, Fe₂O₃, V₂O₅, NiO, Cr₂O₃, fluorides, sulfides, Pt, Ru, Rb, Pd, Os, Ir, Ag and Au, as the nucleating agent.

Then, the mother glass 60 is softened by beating at a temperature of at least its softening point with the heaters 62, and thereafter the mother glass 60 is press-molded with the mother die 64 as shown in Fig. 6(b). Furthermore, while pressing the mother glass 60 with the mother die 64, the mother glass 60 is heat treated under a condition at which it is crystallized. Next, the press member 11 is obtained by cooling the mother glass 60 to room temperature. By the press-molding and heat treatment, a press surface 11a having a reversed shape of an optical element (see Fig. 1(b)) is formed, so that the press member 11 made of a crystallized glass is obtained. At this time, crystallization may be carried out after taking out the mother glass 60 from the die-molding machine subsequent to the press-molding of the mother glass 60. Moreover, the condition at which the mother glass 60 is crystallized is different depending on the type of the mother glass 60.

Then, as shown in Fig. 6(c), an intermediate film 12 and a protective film 13 are formed at least on the press surface 11a of the press member 11. The intermediate film 12 and the protective film 13 can be formed, for example, by sputtering or evaporation. Thus, the die 10 for molding an optical element is produced.

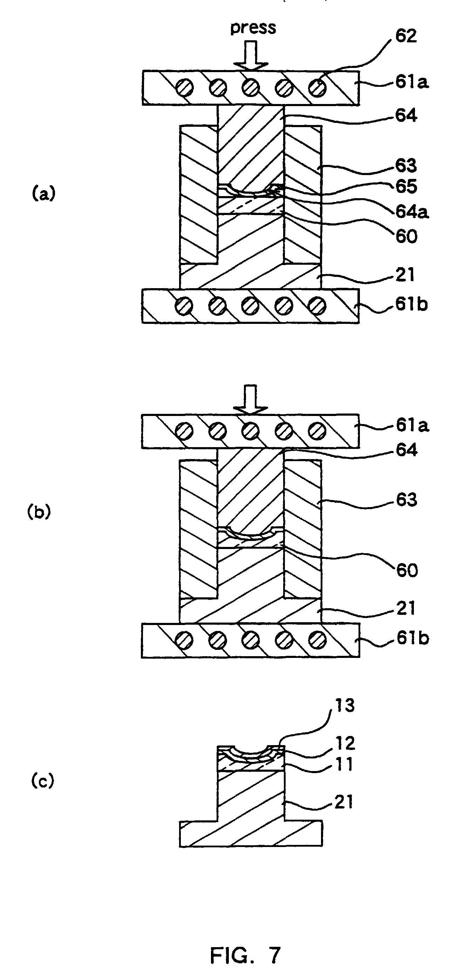

Next, referring to Fig. 7, a case in which the die 10a described in the first embodiment is produced is explained. First, as shown in Fig. 7(a), a base 21 is placed on a press head 61b of a the-molding machine, and a drum 63 is placed so that it is inserted onto a convex portion of the base 21. Then, a mother glass 60 to be a press member 11 is placed on the base 21 as well as in the drum 63. Because the the-molding machine and the mother glass 60 are the same as those described in the above embodiment, overlapped explanation is omitted.

Then, as shown in Fig. 7(b), the mother glass 60 is press-molded with a mother die 64. Furthermore, while pressing the mother glass 60 with the mother die 64, the mother glass 60 is heat treated under a condition at which it is crystallized. Next, by cooling the mother glass 60 to room temperature, a press member 11 that is made of a crystallized glass and is bonded to the base 21 is obtained.

Then, as shown in Fig. 7(c), an intermediate film 12 and a protective film 13 are formed on at least a press surface 11a of the press member 11. The steps in Figs. 7(b) and (c) are the same as those described in Figs. 6(b) and (c). Thus, the die 10a for molding an optical element can be produced.

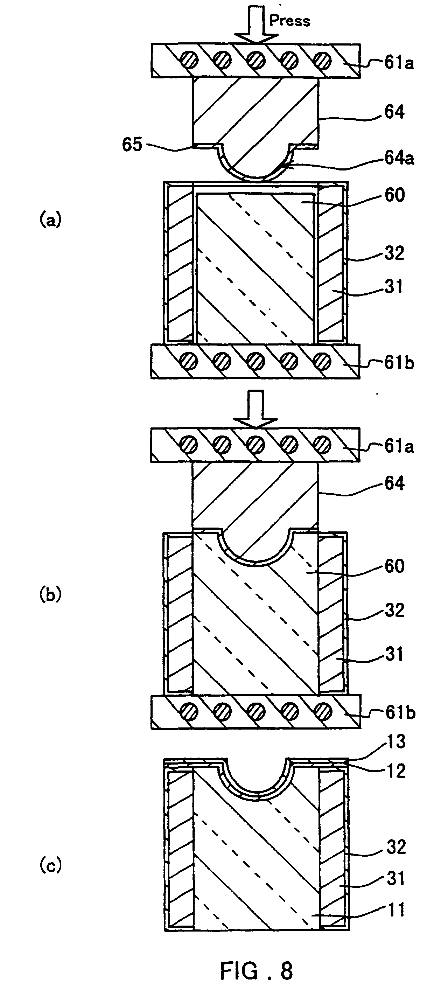

Next, referring to Fig. 8, a case in which the die 30 described in the second embodiment is produced is explained. First, as shown in Fig. 8(a), a protective member 31 on which a protective layer 32 is formed is placed on a press head 61b of a die-molding machine, and a mother glass 60 is placed within the protective member 31. The protective layer 32 is formed, for example, by evaporation or sputtering. The die-molding machine in Fig. 8(a) is different from that illustrated in Fig. 6 only in that it does not include the drum 63. That is, in this case, the protective member 31 functions as a drum. Furthermore, when the strength of the protective member 31 is not sufficient, it may be placed inside a drum. The mother glass 60 is the same as that illustrated in Fig. 6.

Then, as shown in Fig. 8(b), the mother glass 60 is press-molded with the mother die 64. Furthermore, while pressing the mother glass 60 with the mother die 64, the mother glass 60 is heat treated under a condition at which it is crystallized. Then, by cooling the mother glass 60 to room temperature, a press member 11 with the protective member 31 fixed on its periphery is obtained.

Then, as shown in Fig. 8(c), an intermediate film 12 and a protective film 13 are formed on at least a press surface 11a (see Fig. 2(b)) of the press member 11. The steps in Figs. 8(b) and (c) are the same as those illustrated in Figs. 6(b) and (c). Thus, the die 30 for molding an optical element can be produced.

According to the above-mentioned method, the dies for molding an optical element described in the first and second embodiments can be produced easily. In particular, in the above method, because a glass is used as a material of the press member 11, the press surface 11a can be formed easily, and the press member 11 can be formed with good working accuracy.

### Fourth Embodiment

An example of an optical element of the present invention is described in a fourth embodiment.

An optical element 90 of the fourth embodiment is produced by press-molding an optical element material using the dies described in the first and second embodiments.

In the following, a method for producing an optical element of the present invention is described referring to Fig. 9. First, as shown in Fig. 9(a), an optical element material 90a to be the optical element 90 is placed in a machine for molding optical elements. The machine comprises press heads 91a and 91b, heaters 92 placed in the press heads 91a and 91b, a cylindrical drum 93, and dies 94a and 94b for molding an optical element, which are inserted in the drum 93. The dies 94a and 94b are those of the present invention described in the first and second embodiments. The die 94a as an upper die and the die 94b as a lower die are inserted in the drum 93, so that respective press surfaces face each other. Furthermore, the optical element material 90a is placed between the die 94a and the die 94b. As the optical element material 90a to be the optical element 90, for example, a resin or a glass may be used. Specifically, as the optical element material 90a, for example, borosilicate glass, polymethylmethacrylate resin, or the like may be used.

Then, the optical element material 90a is softened by heating with heaters 92, and thereafter, the optical element material 90a is press-molded with press heads 91a and 91b as shown in Fig. 9(b). Then, the optical element 90 is obtained by cooling the optical element material 90a that has been molded.

In the above method for producing an optical element, the optical element material 90a is press-molded using the die of the present invention for molding an optical element. Thus, an optical element with a high working accuracy and uniformity can be mass-produced. Furthermore, because the die for molding an optical element has a high durability, a large number of optical elements can be mass-produced with one set of the die.

### Examples

The present invention is further described in detail referring to the following examples.

### Example 1

In Example 1, a die for molding an optical element described in the first embodiment was produced. Among the dies shown in the first embodiment, a die not including an intermediate film 12 and a protective film 13 was produced in Example 1.

The die of Example 1 for molding an optical element (hereinafter referred to as the die 101) includes only a press member 11. The press member 11 is made of a crystallized glass containing NiO (softening temperature of 850 °C) and has a cylindrical shape with an outer diameter of 6.6 mm and a height of 8.8 mm. The press surface 11a of the die 101 was formed with high accuracy so that it had a reversed shape of an optical element to be produced (the press surface having a radius of curvature of 3.2 mm, an axisymmetric nonspherical surface having a press section with a diameter of 5.0 mm, shape accuracy of not more than ± 0.05 µm, surface roughness of not more than 0.01 µm).

Referring to Figs. 6(a) and (b), a method for producing the die 101 is described.

First, a mother glass 60 (glass transition point of 442 °C, softening point of 610 °C) before crystallization was placed in a die-molding machine shown in Fig. 6(a). A mother die 64 in the die-molding machine is made of a cemented carbide (a WC-Co alloy). A press surface 64a of the mother die 64 was formed with high accuracy so that it had the same shape as that of the optical element to be produced (a shape which includes an axisymmetric nonspherical surface having a radius of curvature of 3.2 mm and having a press section with a diameter of 5.1 mm, shape accuracy of ± 0.04 µm, surface roughness of not more than 0.01 µm). Furthermore, a protective film 65 made of Pt (film thickness of 1.5 µm) for improving oxidation resistance and glass melt adhesion resistance was formed on the press surface 64a by sputtering. A glass of a cylindrical shape (outer diameter of 6.6 mm) was used as the mother glass 60.

Then, the mother glass 60 that is inserted in the drum 63 is softened by heating with heaters 62 at 610 °C, and thereafter it was press-molded under a press load of 150 kgf (1470 N). Then, while adding the press load, the temperature was further increased to a point at which the mother glass 60 was crystallized (780 °C), and that temperature was maintained for 30 minutes to crystallize the mother glass 60. Then, it was cooled to room temperature. Thus, a press member 11 made of a crystallized glass (the die 101) was obtained.

On the other hand, as a comparative example, a comparative die 1 was produced. The comparative die 1 was produced by forming a press surface by grinding a press member made of a cemented carbide (a WC-Co alloy), and further forming a protective film made of Pt (film thickness of 1.5 µm) on the press surface.

When producing the die 101 of the first embodiment, because many dies 101 can be obtained by press-molding the mother glass 60 with a single mother die 64, the die 101 was able to be prepared in a very short time (50 minutes per one die). Furthermore, when a plurality of dies 101 were produced, irregularity in shape among respective dies was small (irregularity of not more than ± 0.01 µm).

On the other hand, in the comparative the 1 using a cemented carbide that is difficult to be worked accurately, a special apparatus and a large amount of time were required for the working. It required 20 hours to produce one comparative die. Furthermore, when a plurality of comparative dies 1 of the same shape were produced, irregularity in shape was much larger than in the case of the the 101 (irregularity of at least 0.07 µm).

Moreover, production cost of the die 101 of Example 1 was one thirtieth that of the comparative die 1.

### Example 2

In Example 2, an example in which an optical element was produced using the die 101 of the first embodiment and the comparative die 1 is explained referring to Fig. 9. In this Example 2, an optical element was produced by the method described in the fourth embodiment.

In Example 2, the die 101 of the first embodiment was used as a die 94a, which is an upper die. A die 94b, which is a lower die, was of the same material as that of the die 94a (a crystallized glass containing NiO), and only the shape of the press surface was different (approximate radius of curvature of 2.6 mm, an axisymmetric nonspherical surface having a press section with a diameter of 5.0 mm).

Then, as shown in Fig. 9(a), an optical element material 90a was placed between the dies 94a and 94b. As the optical element material 90a, a spherical shaped polymethylmethacrylate resin (PMMA resin) (diameter of 4.5 mm) was used. Next, as shown in Fig. 9(b), the optical element material 90a was press-molded at a molding temperature of 180 °C and under a press load of 80 kgf (784 N), and an optical element 90 was produced.

According to the above method, an optical element was produced repeatedly. Also, as a comparative example, an optical element was produced repeatedly using the comparative die 1 of Example 1.

When using the die 101 of Example 1, irregularity in the shape of the press surface was smaller than in the case of using the die 1, so that optical elements with little irregularity in shape was able to be produced in large quantity with stability.

Furthermore, the press member 11 made of a crystallized glass was used in the the 101 of Example 1, and the softening point of the crystallized glass was higher than that of the mother glass 60 (softening point before crystallization of 610 °C, softening point after crystallization of 850 °C). Thus, according to the die 101 of Example 1, an optical element can be press-molded at a temperature of not lower than the glass transition point of the mother glass 60. At the temperature for press-molding an optical element described in Example 2 (180 °C): the die 101 of Example 1 had a sufficient strength to withstand the press load; the press surface was not deformed by the press pressure; and the optical element obtained had a good optical performance even when repeating the press-molding 1000 times.

Furthermore, the die 101 of Example 1 was inactive to the optical element material 90a made of PMMA, and an optical element was able to be produced with good separatability.

### Example 3

In Example 3, another example in which a die for molding an optical element described in the first embodiment was produced is explained. In Example 3, among the dies shown in the first embodiment, a die including a press member 11 and a protective film 13 was produced.

A die of Example 3 for molding an optical element (hereinafter referred to as a die 102) includes a press member 11 having a cylindrical shape (outer diameter of 7.0 mm, length of 7.5 mm) and made of a crystallized glass (softening point of 800 °C) containing ZrO₂, and a protective film 13 formed on a press surface 11a of the press member 11. The press surface 11a was formed with high accuracy so that it had a reversed shape of an optical element to be produced (radius of curvature of 4.5 mm, an axisymmetric nonspherical surface having a press section with a diameter of 5.9 mm, shape accuracy of ± 0.05 µm, surface roughness of not more than 0.01 µm). As the protective film 13, a Pt-Ir alloy film having a thickness of 1 µm was used.

Next, referring to Fig. 6, a case in which the die 102 for molding an optical element was produced by the method shown in the third embodiment is explained.

Referring to Fig. 6(a), in a mother die 64 made of a cermet (TiN-TaN based), a press surface 64a was formed with high accuracy so that it bad the same shape as of an optical element to be produced (radius of curvature of 4.5 mm, an axisymmetric nonspherical surface having a press section with a diameter of 6.0 mm, shape accuracy of ± 0.05 µm, surface roughness of not more than 0.01 µm). Furthermore, a protective film 65 made of a Pt-Ir alloy (film thickness of 2 µm) for improving oxidation resistance and glass melt adhesion resistance was formed on the press surface 64a by evaporation.

The mother die 64 was inserted in an inner hole of a drum 63 together with a mother glass 60 before crystallization (glass transition point of 460 °C, softening point of 550 °C) having a cylindrical shape (outer diameter of 7.0 mm, height of 7.2 mm). Then, the mother glass 60 was softened by heating at 560 °C with heaters 62, followed by press-molding at 250 kgf (2450 N), so that the optical element form in the press surface 64a of the mother die 64 was transcribed into the mother glass 60 to form a press surface. Then, the molded mother glass 60 was taken out from the molding machine to be cooled, and an ultraviolet ray (wavelength of 365 nm) was irradiated for 2 minutes. By this ultraviolet irradiation, nucleus formation is accelerated. Then, it was heat treated under a condition at which the mother glass 60 was crystallized (maintaining at a temperature of 790 °C for 30 minutes) using an electric furnace, so that the mother glass 60 was crystallized completely. Then, it was cooled to room temperature. A protective film 13 (made of a Pt-Ir alloy and having a thickness of 1 µm) for improving oxidation resistance and glass melt adhesion resistance was formed on the thus obtained press surface 11a of the press member 11 by evaporation.

On the other hand, as a comparative example with respect to the die 102, a comparative die 2 using a press member having a press surface with a reversed shape of an optical element and made of barium borosilicate glass (glass transition point of 625 °C, softening point of 835 °C) was produced. The comparative die 2 was press-molded at a press-molding temperature of 850 °C. In the comparative die 2, no protective film was formed. In the comparative die 2, the glass was not crystallized.

Because the die 102 of Example 3 was press-molded at a low temperature (560 °C), the press surface 64a of the mother die 64 was free from oxidation, surface roughening, and glass adhesion when molding was performed about 500 times. Thus, a die 10 for molding an optical element, in which the press-molded press surface 11a had a very good shape accuracy, was obtained.

On the other hand, in the case of the comparative die 2, because the molding temperature was high (850 °C), when molding was performed about 20 times, oxidation and surface roughening were caused in the press surface 64a of the mother die 64, and at the same time, glass adhesion was generated. Thus, in the case of the comparative die 2, shape accuracy of the press-molded press surface was very poor.

### Example 4

Example 4 shows an example in which an optical element was produced using the die 102 produced in the above Example 3. In this Example 4, an optical element was produced by the method described in the fourth embodiment. In the following, this example is described referring, to Fig. 9.

Referring to Fig. 9(a), the die 102 was used as a die 94a for molding an optical element, which was an upper die. A die that uses the same materials as of the die 94a (a crystallized glass containing ZrO₂, a protective film of Pt-Ir) and is different only in the shape of the press surface (approximate radius of curvature of 7.2 mm, an axisymmetric nonspherical surface having a press section with a diameter of 5.9 mm) was used as a die 94b for molding an optical element, which was a lower die.

Furthermore, using a borosilicate glass (glass transition point of 516 °C, softening point of 607 °C) of a spherical shape (diameter of 6.0 mm) as an optical element material 90a, an optical element was molded at a molding temperature of 610 °C and under a press load of 200 kgf (1960 N).

Using the machine for molding optical elements shown in Fig. 9, an optical element was produced repeatedly. Furthermore, as a comparative example, an optical element was produced repeatedly using the comparative die 2 described in Example 3.

In the die 102 of Example 3, a crystallized glass containing ZrO₂ is used for the press member 11. The crystallized glass has a softening point higher than that of the mother glass 60 before crystallization (softening point before crystallization of 550 °C, softening point after crystallization of 800 °C). Thus, the die 102 had a high temperature strength that was sufficient to withstand a press-molding at a temperature higher than the transition point of the mother glass 60, which was used as a material of the die, and it was able to press-mold an optical element with good accuracy.

On the other hand, in the comparative die 2 as a comparative example, because the glass as a material of the die was not crystallized, the glass transition point of the comparative die 2 and that of the material glass were equal, so that when an optical element was press-molded at a temperature of at least the transition point of the material glass, the press surface was deformed.

Furthermore, while the molding temperature of the comparative die 2 is as high as 850 °C, the molding temperature of the die 102 is as low as 560 °C (see Example 3). Thus, in the die 102, the difference between the molding temperature and room temperature (the temperature when cooled) was small, so that when cooling to room temperature after molding, the change in the shape of the press surface was small (shape accuracy of ± 0.05 µm). On the other hand, in the comparative die 2, the shape of the press surface changed greatly when cooling it to room temperature after molding (shape accuracy of ± 0.12 µm). Thus, the optical element obtained with the die 102 had a better performance than the optical element obtained with the comparative die 2.

Furthermore, in the die 102, irregularity in the shape of the press surface was small, and it had a sufficient strength to withstand a press load at the molding temperature for the optical element (610 °C). Thus, it was able to mass-produce an optical element of high quality without deforming the press surface by press pressure.

Furthermore, in the die 102, because the protective film 13 was formed on the press surface 11a, separation from the optical element material 90a was easy when press-molding the optical element material 90a (borosilicate glass). On the other hand, in the comparative the 2, because the protective film was not formed, melt adhesion between the optical element material 90a and the comparative die 2 occurred frequently when press-molding the optical element material 90a. Furthermore, when it was tried to take out an optical element forcibly in a state in which the optical element was melt adhered to the comparative die 2, cracking or breakage was caused in a portion of the comparative die 2 to which the optical element was melt adhered, and the comparative die 2 became useless.

### Example 5

In Example 5, an example in which the optical element 10a described in the first embodiment was produced is explained referring to Fig. 7.

The the of Example 5 for molding an optical element (hereinafter referred to as a die 103) includes: a base 21 that has a convex shape in vertical cross section and is made of a cemented carbide (WC-Co) (outer diameter of a lower step of 16.0 mm, outer diameter of an upper step of 6.5 mm, height of 5.0 mm); a press member 11 formed on an end of the base; an intermediate film 12 formed on a press surface 11a; and a protective film 13 formed on the intermediate film 12.

The press member 11 is made of a crystallized glass (softening point of 850 °C, an approximately cylindrical shape having an outer diameter of 6.5 mm and a height of 2.0 mm) containing TiO₂. One end of the press member 11 was the press surface 11a, which was formed with high accuracy so that it had a reversed shape of an optical element to be formed (radius of curvature of 5.0 mm, an axisymmetric nonspherical surface having a press section with a diameter of 4.5 mm, shape accuracy of ± 0.05 µm, surface roughness of not more than 0.01 µm). The intermediate film 12 used a Cr-Ta alloy and had a thickness of 0.5 µm. Furthermore, the protective film 13 was made of a Pt-Ta ahoy (film thickness of 1.0 µm) for improving oxidation resistance and glass melt adhesion resistance.

In the following, an example in which the the 103 for molding an optical element was produced by the method described in the third embodiment is explained.

Referring to Fig. 7, the mother die 64 was made of a cermet (TiC-TaN-Ni-Mo based), and its press surface 64a was ground with high accuracy so that it had the same shape as that of an optical element to be formed (radius of curvature of 5.0 mm, an axisymmetric nonspherical surface having a press section with a diameter of 4.6 mm, shape accuracy of ± 0.04 µm, surface roughness of not more than 0.01 µm). A protective film 65 made of a Pt-W alloy (film thickness of 1.2 µm) for improving oxidation resistance and glass melt adhesion resistance was formed on the press surface 64a of the mother die 64 by sputtering.

Furthermore, as the base 21, a cemented carbide (WC-Co) was used, and it was ground into a convex shape in vertical cross section (outer diameter of a lower step of 16.0 mm, outer diameter of an upper step of 6.5 mm, height of 5.0 mm) using a diamond grinding wheel. Then, as shown in Fig. 7(a), a mother glass 60 (glass transition point of 480 °C, glass softening point of 570 °C) of a cylindrical shape (outer diameter of 6.5 mm, height of 1.8 mm) was placed on the base 21, and it was softened by heating at 580 °C. Then, as shown in Fig. 7(b), using the mother die 64, the base 21 and the mother glass 60 were press-molded integrally at 320 kgf (3136 N), and an optical element form in press surface 64a of the mother die 64 was transcribed into one end of the mother glass 60 to form a press surface 11a. Then, the temperature was further increased to a point at which the mother glass 60 was crystallized (800 °C). That temperature was maintained for 60 minutes, so that the mother glass 60 was crystallized completely. Then, the press member 11 thus obtained was cooled to room temperature.

Next, an intermediate film 12 made of a Cr-Ta alloy (film thickness of 0.5 µm) was formed on the press surface 11a by sputtering, and a protective film 13 for improving oxidation resistance and glass melt adhesion resistance (a Pt-Ta alloy, film thickness of 1.0 µm) was formed on the intermediate film 12 by evaporation. Thus, the die 103 for molding an optical element was produced.

### Example 6

Next, an example in which an optical element was produced using the die 103 of Example 5 is explained. In this Example 6, an optical element was produced by the method described in the fourth embodiment.

Referring to Fig. 9, in Example 6, the die 103 of Example 5 was used as a die 94a for molding an optical element, which was an upper die. A die 94b for molding an optical element, which was a lower die, was of the same material as that of the upper die, and was different only in the shape of the press surface 11a (approximate radius of curvature of 4.5 mm, an axisymmetric nonspherical surface having a press section with a diameter of 4.5 mm).

As an optical element material 90a, a crown based borosilicate glass (glass transition point of 553 °C, softening point of 625 °C) of a cylindrical shape (outer diameter of 6.0 mm, height of 3.0 mm) was used.

Using the machine for molding optical elements described in the fourth embodiment, an optical element was molded repeatedly by press-molding the optical element material 90a at a molding temperature of 630 °C and under a press load of 300 kgf (2940 N).

Because the press member 11 for the optical element 103 was made of a crystallized glass having a softening point that had been increased by crystallization (softening point before crystallization of 570 °C, softening point after crystallization of 850 °C), it had a sufficient strength to withstand a molding at a molding temperature of 630 °C. Thus, when press-molding was repeated, deformation of the press surface 11a by the press pressure did not occur.

Furthermore, the die 103 had the intermediate film 12 between the press surface 11a and the protective film 13. Thus, the protective film 13 was difficult to be peeled off when repeating the press-molding of an optical element, compared to the case in which the intermediate film 12 was not formed.

Furthermore, because the base 21 and the press member 11 of the die 103 were integrated firmly, when an optical element was produced repeatedly using the die 103, the problem of their separation did not occur.

In the above, embodiments of the present invention have been described using examples. However, the present invention is not limited to the above embodiments, and can be applied to other embodiments based on the technical idea of the present invention.

### INDUSTRIAL APPLICABILITY

The die of the present invention for molding an optical element includes a press member having a press surface, the press member made of a crystallized glass. Thus, according to the die of the present invention, a die for molding an optical element in which a press surface is accurately formed easily and which is capable of press-molding at a high temperature can be obtained.

In the method of the present invention for producing a die for molding an optical element, a mother glass is press-molded with a mother die, and, further is heat treated under a condition at which the mother glass is crystallized. Thus, according to the method of the present invention, a die for molding an optical element, which includes a press member having a press surface with a reversed shape of the optical element and made of a crystallized glass, can be produced easily.

The optical element of the present invention is press-molded using a die in which a press surface is accurately formed easily and which is capable of press-molding at a high temperature. Thus, an optical element of high performance and high uniformity can be obtained.

## Claims

1. A die for press-molding an optical element material, comprising
a press member having a press surface for pressing the optical element material,
wherein the press member is made of a crystallized glass.

2. The die according to claim 1, further comprising a protective film, which is inactive to the optical element material, on the press surface.

3. The die according to claim 2, wherein the protective film comprises at least one metal selected from Pt, Pd, Ir, Rh, Os, Ru, Re, W and Ta.

4. The die according to claim 2, further comprising an intermediate film for preventing the protective film from peeling from the press member.

5. The die according to claim 4, wherein the intermediate film comprises a component included in the press member or a component included in the protective film.

6. The die according to claim 4, wherein the intermediate film comprises at least one metal selected from Cr, Ta, Mo, Ni, W, Zr, Co, Ti, and Cu.

7. The die according to claim 1, further comprising a base made of a metal, wherein the press member is formed on the base.

8. The die according to claim 7, further comprising a metal film between the base and the press member.

9. The die according to claim 1, further comprising a protective member fixed on a periphery of the press member.

10. The die according to claim 9, wherein the protective member is made of a metal, a cermet, or a ceramic.

11. The die according to claim 10, wherein the protective member has a protective layer on its surface.

12. The die according to claim 9, wherein a thermal expansion coefficient of the press member is smaller than that of the protective member.

13. The die according to claim 1, wherein the crystallized glass contains a nucleating agent.

14. A method for producing a die for molding an optical element, which comprises a press member having a press surface for pressing an optical element material, comprising:
a first step of forming the press surface by press-molding a mother glass, which is softened by heating, with a mother die; and
a second step of forming the press member made of a crystallized glass by heat treating the mother glass that has been press-molded under a condition at which the mother glass is crystallized.

15. The method according to claim 14, wherein the first step comprises placing the mother glass, which is softened by heating, on a base, and then forming the press surface by press-molding the mother glass with the mother die.

16. The method according to claim 15, wherein the base has a metal film on a surface that is in contact with the mother glass.

17. The method according to claim 14, wherein the first step comprises placing the mother glass, which is softened by heating, inside an approximately cylindrical protective member, and then forming the press surface by press-molding the mother glass with the mother die.

18. The method according to claim 14, further comprising a third step of forming a protective film, which is inactive to the optical element material, on the press surface after the second step.

19. The method according to claim 14, further comprising a third step of forming an intermediate film on the press surface, and a fourth step of forming a protective film, which is inactive to the optical element material, on the intermediate film.

20. The method according to claim 19, wherein the protective film comprises at least one metal selected from Pt, Pd, Ir, Rh, Os, Ru, Re, W and Ta.

21. The method according to claim 20, wherein the intermediate film comprises a component included in the press member or a component included in the protective film.

22. The method according to claim 20, wherein the intermediate film comprises at least one metal selected from Cr, Ta, Mo, Ni, W, Zr, Co, Ti and Cu.

23. The method according to any of claims 14 to 22, wherein the mother glass contains a nucleating agent.

24. The method according to claim 23, wherein the nucleating agent comprises at least one selected from TiO₂, ZrO₂, Fe₂O₃, V₂O₅, NiO, Cr₂O₃, fluorides, sulfides, Pt, Ru, Rb, Pd, Os, Ir, Ag and Au.

25. An optical element produced by press-molding an optical element material using the die according to any of claims 1 to 13.
